# EUROPEAN PATENT SPECIFICATION

(11) **EP 2 502 499 B1**
(45) Date of publication and mention of the grant of the patent: **12.03.2014**
(21) Application number: 11159734.0
(22) Date of filing: 25.03.2011
(51) Int. Cl.: A23D 9/00, C11B 3/00, C11B 3/02, C11B 3/04, C11B 3/10, C11B 3/14

(54) **Refined plant oils free of glycidyl esters**
Raffinierte Pflanzenöle aus Glycidylester
Huiles végétales raffinées dépourvues d'esters glycidyliques

(43) Date of publication of application: 26.09.2012
(73) Proprietor: Nestec S.A., 1800 Vevey (CH)
(72) Inventor: Craft, Brian, 1815, Clarens (CH); Destaillats, Frederic, 1077, SERVION (CH); Sandoz, Laurence, 1040, ECHALLENS (CH); Nagy, Kornél, 1005, LAUSANNE (CH)
(74) Representative: Cogniat, Eric Jean Marie

(56) References cited:
- WO-A1-2011/069028
- US-A- 5 545 329

## Description

The present invention generally relates to the field of oil refinement. In particular, the present invention relates to the field of processes to produce refined oils, substantially free of contaminants, such as glycidyl esters, for example. In accordance with the present invention, such refined plant oils free of glycidyl esters may be obtained by using plant oil or a plant oil fractions having a maximum level of 3 weight-% diacylglycerols (DAGs) in the oil refinement process.

Glycidyl esters (GEs) are process contaminants that may be generated, e.g., during the deodorization step of edible oil refining at which oils may be heated under vacuum (3-7 mbar) up to 240-270°C.

It has been documented that glycidyl esters are occurring in food products resulting in human exposures. Although no evidence is available indicating any adverse health effects, their presence in food has raised some concerns (Schilter et al., Eur. J. Lipid Sci. Technol. 2011, 113, 309-313).

If treated at too high temperatures detectable levels of GEs may be generated in some plant oils.

Currently, the generation of GEs is avoided by avoiding the treatment of oils at very high temperatures for extended time periods.

However, there is a need in the art for a process for oil refinement that avoids the generation of GE, even if the oil is treated at elevated temperatures for longer times.

The present inventors have addressed this need.

Consequently, it was the object of the present invention to provide the art with a process for plant oil refinement that eliminates the risk of GEs generation during high temperature treatments.

The present inventors were surprised to see that they could achieve this objective by the subject matter of claim 1. The subject matter of the dependant claims further develops the idea of the present invention.

In particular the present inventors have found that GE may be generated after a high temperature treatment of oils which are rich in DAGs.

For example, palm oil is unique in that it contains a high amount of DAGs (4-12 g per 100g of oil), with triacylglycerols ([TAGs], 88-96%) comprising the majority of its total glycerides. The level of DAGs in palm oil can be attributed to two main factors: the degree of ripening when the palm fruits are harvested and the time period between harvest and the production of crude palm oil (CPO).

The inventor's observations suggested that GE formation was largely independent of the reaction routes involved in the formation of MCPD esters. Based on these considerations, it was concluded that GEs could be effectively minimized by reducing the levels of DAG in oils.

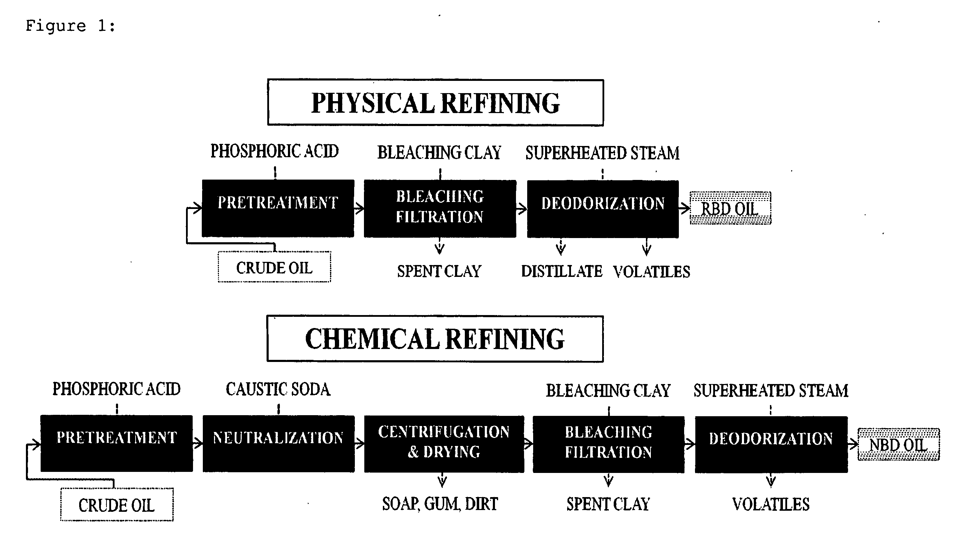

GEs are mainly formed by thermal degradation of DAG as proposed in Figure 1; a reaction that is quantitatively significant at temperatures above 200°C.

The effects of DAG content and deodorization temperature on the occurrence of GEs in refined palm oil were investigated. Deodorization experiments confirmed that the formation of GEs from DAG is significant at temperatures above 230°C.

Experimental data of the inventors show that DAG reacts to glycidyl ester and a free fatty acid at elevated temperatures and that this reaction leads to an exponentially increased generation of glycidyl esters at temperatures greater than 230°C (Figure 1).

Therefore, it is preferred that the temperatures employed during vegetable oil refining do not exceed 230°C, in order to ensure a low abundance of contaminants.

A predictive model was developed that directly correlates the level of free fatty acids (FFA) in crude palm oil (CPO) to the DAG contents of fully refined palm oil; 3% DAG in refined palm oil is equivalent to 1.2-1.3% FFA in the initial CPO.

The inventors have found that the content of DAG, and consequently of FFA in vegetable oil, such as palm oil for example, can greatly influence the formation of GEs under thermal conditions.

An experiment was carried out in order to better understand if there exists a critical limit of DAG that once exceeded, leads to the generation of GEs in abundance. To this end, cottonseed oil low in DAG (<1%) was procured to be used as a reaction medium. Pure diheptadecanoin (C17:0-DAG) was added to this oil in various amounts ranging from 1 to 5% of the total oil. The obtained mixtures were heated in sealed glass ampoules at 235°C for 2 h.

The formation of glycidyl heptadecanoate from diheptadecanoin was monitored by ULC-MS/MS.

It was found that the formation of GEs from DAG is not directly proportional to the DAG content. Above a level of 3% DAG, the formation of GEs becomes particularly dominant.

Consequently, the present invention relates to the use of crude plant oil or a plant oil fraction having a maximum level of 1.3 weight-% FFA in a refinement process to produce a refined plant oil substantially free of GEs **characterized in that the plant oil or plant oil fraction has a maximum level of 3.5 weight-% DAG before deodorization.**

A plant oil is considered as "crude" for the purposes of the present invention if it the oil has not been submitted to any treatment after pressing.

"Substantially free" of GEs means that the refined oil contains less than 1 ppm GEs, for example less than 0.5 ppm GEs, preferably less than 0.3 ppm glycidyl esters.

Plant oil refinement is well known in the art and nowadays a standard industrial procedure.

Modern plant oil; e.g., vegetable oil; processing today consists of two predominant methods, chemical and physical refining, summarized in figure 1.

In efforts aimed at increased sustainability, oil refineries have modified their vegetable oil processing lines in the past few decades for the minimization of energy expenditure (economizers) and the reduction of waste; however, the steps of these two refining processes have essentially remained the same.

Physical refining is essentially an abridged form of chemical refining and was introduced as the preferred method of palm oil refining in 1973. It is unique in that it is a three step continuous operation where the incoming crude oil is pretreated with acid (degumming), cleansed by being passed through adsorptive bleaching clay, and then subjected to steam distillation. This process allows for the subsequent deacidification, deodorization, and decomposition of carotenoids unique to palm oil (i.e. the crude oil is deep red in color, unlike other vegetable oils). Given the lack of neutralization step in physical refining, refined bleached (RB) oil produced from a physical refinery contains nearly the same FFA levels as found in the crude oil.

Neutralized bleached (NB) oil from a chemical refinery specifies a limit of 0.15% in the NB oil (0.10 in the RBD/NBD fully refined oils). NB and RB palm oil are very comparable pre-deodorization in every other aspect.

Consequently, the refinement process of the present invention may comprise a pre-treatment step, a bleaching step and a deodorization step.

The pre-treatment step may comprise pre-treating the crude oil with an acid, the bleaching step may comprise heating the oil and cleaning the oil by passing it through adsorptive bleaching clay, and the deodorization step may comprise a steam distillation.

Obviously, the lower the content of free fatty acids is in the crude oil, the less likely is the formation of GEs during refinement.

Hence it is particularly preferred, if the crude plant oil or plant oil fraction has a maximum level of 2 weight-% weight-% FFA, or even a maximum level of 1.3 weight-% FFA.

As the abundance of FFA in crude vegetable oil is linked to the DAG content of the refined palm oil, e.g., before deodorization, it is preferred to have a low DAG content in the oil to avoid the generation of glycidyl esters.

Consequently, according to the present invention, the plant oil or plant oil fraction may have a maximum level of 3.5 weight-% DAG before deodorization. For example, the plant oil or plant oil fraction may have a maximum level of 3.3 weight-% DAG, preferably 3 weight-% before deodorization.

For example in the palm oil production, DAGs are the result of the enzymatic hydrolysis of TAGs by lipases during palm fruit ripening. This reaction is particularly significant when fruits are over-ripened and fall from the plant to the ground. Upon contact the fruits become bruised and this result in an increased contact between lipolytic enzymes and newly secreted oil.

Consequently, critical parameters governing the level of DAGs in palm oil are the degree of ripening and as well time period between harvest of the fresh fruits and the production of the crude palm oil (CPO).

It is consequently preferred to use the fresh palm fruits for the production of palm oil without any unnecessary delay.

In one embodiment of the present invention is the time period from the harvest of the plant material to the production of the refined oil less than a week, preferable less than 24 hours and preferably less than 12 hours.

As elevated temperatures favour the formation of GEs exponentially, it may be preferred if the deodorization step is carried out at less than 240°C, preferably less than 230°C, even more preferred less than 220°C.

Any plant oil may be refined in accordance with the present invention.

Preferably, the oil is intended for human or animal consumption. For example, the plant oil may be selected from the group consisting of palm oil, soybean oil, rapeseed oil, canola oil, sunflower oil, coconut oil, palm kernel oil, cottonseed oil, peanut oil, groundnut oil, or combinations thereof.

In a particularly preferred embodiment of the present invention the plant oil or plant oil fraction is palm oil or a palm oil fraction.

The use of the present invention allows it to significantly reduce or eliminate GEs in refined plant oils.

Consequently, the refined plant oil may comprise less than 1 ppm, preferably less than 0.3 ppm, of glycidyl esters. For example, the refined plant oil may be free of GEs.

It is clear for those of skill in the art that they can freely combine features of the present invention without departing from the scope of the invention as disclosed.

Further advantages and features of the present invention are apparent from the following figures and examples.
Figure 1 shows an outline of the processes for chemical and physical refining of vegetable oils.

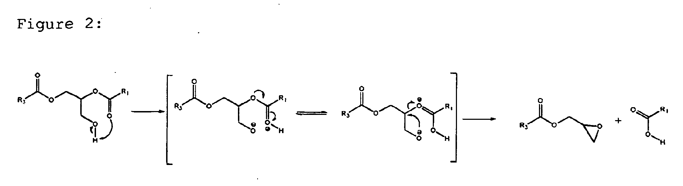

Figure 2 shows the proposed mechanism for the formation of GEs from DAGs at high temperatures.
Figure 3 shows the influence of the deodorization temperature on the formation of GEs from DAGs in refined-bleached palm oil. The above data are a sum of the glycidyl-laurate, - linoleate, -linolenate, -myristate, -oleate, -palmitate, and - stearate.
Figure 4 shows the nfluence of the level of DAGs on the formation of GEs (results were normalized to the level GEs found in the sample with 5% DAG).

### Examples

### Example 1. Influence of deodorization temperature on GE formation

### 1. Thermal-reaction experiments

Diheptadecanoin was obtained from Nu-Chek-Prep (Elysian, MN, USA). Native fully refined (i.e. refined-bleached-deodorized or RBD) cottonseed oil with DAG content <1% was procured from ADM (Archer Daniels Midland Company, Decatur, IL, USA). Diheptadecanoin was diluted in cotton seed oil at concentrations ranging from 1 to 5%. In vitro thermal reaction experiments were conducted in sealed glass ampoules under nitrogen for 2 h at 235 °C in a gas chromatograph.

### 2. ULC-ToF MS analyses

### 2.1. Standard solutions

Pure glycidyl oleate, palmitate, linoleate and linolenate (Wako Chemicals GmbH, Neuss, Germany) were used as analytical standards to optimize the extraction method from the oil sample as well as for LC-oF-S detection. Glycidyl stearate was synthesized and purified in-house. These standards were used also to perform quantitation of glycidyl esters in the palm oil samples by the standard additions method.

### 2.2. Sample preparation

Glycidyl esters were diluted in n-hexane (1 g oil in 10 mL n-hexane), and 2 mL was then added to 1 g C18 resin (Bakerbond Octadecyl 40µm Prep LC Packing, J.T. Baker) in a beaker. Solid phase mixed with sample was dried under a stream of nitrogen and then transferred on top of a 2 g C18 SPE cartridge (Bakerbond SPE Octadecyl, J.T. Baker). Glycidyl esters were eluted with 15 mL MeOH, eluate was dried under nitrogen and resuspended in 400 µL acetonitrile prior injection into the LC-ToF-MS system.

### 2.3. ULC-ToF MS system and conditions

Chromatographic conditions were optimized using the standard solutions mentioned above. A reversed phase column (Waters Acquity HSS T3, 1.7 µm; 2.1×50 mm) was used for separation of analytes using a methanol:water (75:25, 10 mM Ammonium formate, 0.1 % formic acid) and isopropanol (10 mM ammonium formate, 0.1 % formic acid) gradient, as shown in Table 3 in the Appendix.

Mass spectrometric detection was performed with an LC-QToF Ultra High Definition 6540 from Agilent with an electrospray ionization (ESI) source operated in the positive mode. Within these conditions, different adducts were detected (H+, NH4+, Na+ and K+) with a mass accuracy below 2 ppm.

### 3. Results: influence of the temperature on GEs formation

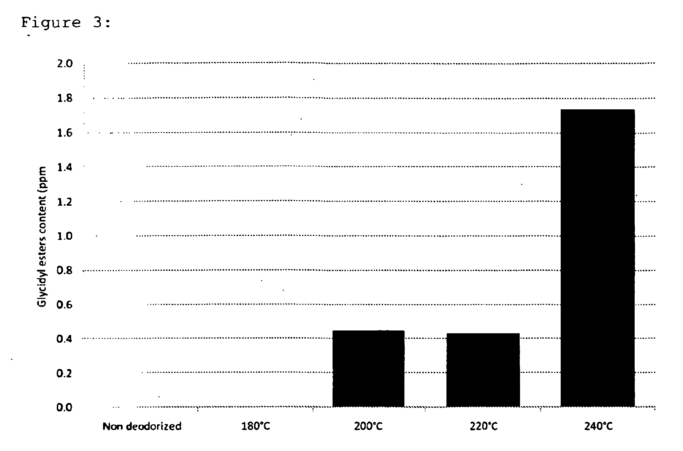

In the example, we set out to determine if the activation energy of the GE formation reaction is influenced by high vacuum pressures such as those employed during edible oil deodorization. To elucidate this potentiality, refined and bleached (RB) palm oils were deodorized at various temperatures using a benchtop steam distillation apparatus. The sum levels of glycidyl esters generated from these experiments were summarized and appear in Figure 3. These results demonstrate that significant GE formation occur above a temperature in the 220 to 230°C range. Therefore, deodorization temperatures employed during palm oil refining should not exceed 220-230°C, in order to ensure low abundance of GEs. The formation of GEs is minimal below this temperature range.

### Example 2. Influence of DAG level on GE formation

### 1. Thermal-reaction experiments.

Refined and bleached (RB) sustainable palm oil was procured from AarhusKarlshamn Sweden AB (AAK, Karlshamn, Sweden). A 500mL total capacity benchtop glass steam distillation apparatus was utilized for in vitro palm oil deodorization experiments. This apparatus was equipped with a thermal-controlled heating mantle, 500mL oil vessel, thermal-regulated water bubbler, a distillation arm with a distillate trap (kept at ∼ -60 °C with dry ice immersed in isopropanol), and a high vacuum pump with pressure controller and safety trap (kept at ∼ -60 °C with liquid nitrogen).

RB palm oil samples were briefly warmed at 80°C in a convection oven to ensure homogeneity. For deodorization experiments, 200mL volumes of RB palm oil were deodorized in the aforementioned apparatus for 2h at temperatures ranging from 180-240 °C with a constant pressure of 2mbar.

### 2. ULC-MS/MS analyses

### 2.1. Standard solutions

Pure glycidyl palmitate at 5 nM concentration in methanol was used as analytical standards to optimize the LC-MS/MS system. A solution of 100 µg/mL 13C3-Sn1-palmitoyl-Sn2-stearyl-MCPD in methanol: acetone at 1 : 4 (v/v) was used as internal standard for measurements in positive ion mode.

### 2.2. Sample preparation

All samples were briefly warmed at 80°C in a convection oven in order to assure homogeneity. For all runs, a 20 µL aliquot of sample was added into 970 µL acetone : n-hexane 1 : 1 (v/v). A 10 µL internal standard solution (1 mg/10 mL equivalent to 1 µg) was then added. Next, a 100 µL volume of this solution was transferred into 900 µL acetone. A 100 µL aliquot of this solution was then transferred into 900 µL methanol. Lastly, a 25 µL from this solution was injected into the ULC-MS/MS system.

### 2.3. ULC-MS/MS system and conditions

A ThermoFisher Accela 1250 system was used to perform ultra high performance liquid chromatography. A silica based octadecyl phase (Waters Acquity HSS C18, 1.7 µm; 2.1x150 mm) was found adequate for the separation of analytes using a buffered methanol-isopropanol gradient, as shown in shown in Table 1 (see Appendix).

A ThermoFisher TSQ Quantum Access Max mass spectrometer was used for the relative quantification glycidyl esters. Electrospray ionization in positive-ion mode followed by triple quadrupole-based tandem mass spectrometry was used to detect glycidyl esters. Applied transitions for the Selected Reaction Monitoring (SRM) experiments are given in Table 2 (see Appendix). For all transitions, a dwell time of 150 ms and a span of 0.2 m/z were used.

### 3. Results: influence of DAG content on GEs formation

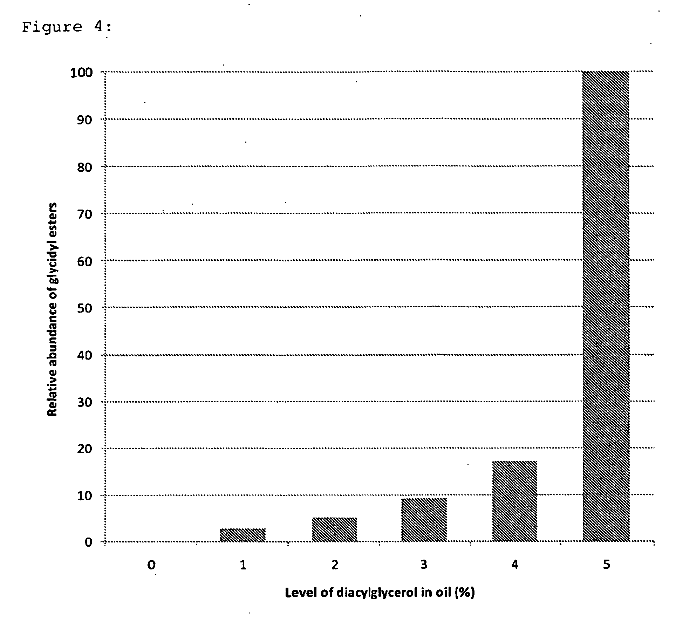

The current experiment was carried out in order to better understand if there exists a critical limit of DAG that once exceeded, leads to the generation of GEs in abundance. To this end, cottonseed oil low in DAG (<1%) was procured to be used as a reaction medium. Pure diheptadecanoin (C17:0-DAG) was added to this oil in various amounts ranging from 1 to 5% of the total oil. The obtained mixtures were heated in sealed glass ampoules at 235°C for 2 h. The formation of glycidyl heptadecanoate from diheptadecanoin was monitored by ULC-MS/MS. The results of these in vitro experiments are provided in Figure 4. This example shows that the formation of GEs from DAG is not directly proportional to the DAG content. Above a level of 3% DAG, the formation of GEs becomes particularly dominant.

## Claims

1. Use of crude plant oil or a plant oil fraction having a maximum level of 1.5 weight-% free fatty acids in a refinement process to produce a refined plant oil substantially free of glycidyl esters **characterized in that the plant oil or plant oil fraction has a maximum level of 3.5 weight-% DAG before deodorization.**

2. Use in accordance with claim 1, wherein the refinement process comprises a pre-treatment step, a bleaching step and a deodorization step.

3. Use in accordance with one of the preceding claims, **characterized in that** the crude plant oil or plant oil fraction has a maximum level of 1.4 weight-% weight-% free fatty acids, preferably a maximum level of 1.3 weight-% free fatty acids.

4. Use in accordance with claim 3, wherein the plant oil or plant oil fraction has a maximum level of 3.3 weight-% DAG, preferably 3 weight-% before deodorization.

5. Use in accordance with claim 4, wherein the pre-treatment step comprises pre-treating the crude oil with an acid, the bleaching step comprises heating the oil and cleaning the oil by passing it through adsorptive bleaching clay, and the deodorization step comprises a steam distillation.

6. Use in accordance with one of the preceding claims, wherein the deodorization step is carried out at less than 240°C, preferably less than 230°C, even more preferred less than 220°C.

7. Use in accordance with one of the preceding claims, wherein the plant oil is selected from the group consisting of palm oil, soybean oil, rapeseed oil, canola oil, sunflower oil, coconut oil, palm kernel oil, cottonseed oil, peanut oil, groundnut oil, or combinations thereof.

8. Use in accordance with one of the preceding claims, wherein the plant oil or plant oil fraction is palm oil or a palm oil fraction.

9. Use in accordance with one of the preceding claims, wherein the refined plant oil comprises less than 1 ppm, preferably less than 0.3 ppm of glycidyl esters.

## Patentansprüche

1. Verwendung von rohem Pflanzenöl oder einer Pflanzenölfraktion mit einem maximalen Gehalt von 1,5 Gew-% an freien Fettsäuren in einem Raffinierungsverfahren zur Herstellung eines raffinierten Pflanzenöls, das im Wesentlichen frei von Glycidylestem ist, **dadurch gekennzeichnet, dass** das Pflanzenöl oder die Pflanzenölfraktion einen maximalen Gehalt von 3,5 Gew-% an DAG vor der Desodorierung aufweist.

2. Verwendung gemäß Anspruch 1, wobei das Raffinierungsverfahren einen Vorbehandlungsschritt, einen Bleichschritt und einen Desodorierungsschritt umfasst.

3. Verwendung gemäß einem der vorhergehenden Ansprüche, **dadurch gekennzeichnet, dass** das rohe Pflanzenöl oder die Pflanzenölfraktion einen maximalen Gehalt von 1,4 Gew-% an freien Fettsäuren, vorzugsweise einen maximalen Gehalt von 1,3 Gew-% an freien Fettsäuren aufweist.

4. Verwendung gemäß Anspruch 3, wobei das Pflanzenöl oder die Pflanzenölfraktion einen maximalen Gehalt von 3,3 Gew-% an DAG, vorzugsweise 3 Gew-%, vor der Desodorierung aufweist.

5. Verwendung gemäß Anspruch 4, wobei der Vorbehandlungsschritt das Vorbehandeln des Rohöls mit einer Säure umfasst, der Bleichschritt das Erhitzen des Öls und das Reinigen des Öls umfasst, indem es durch adsorptive Bleicherde geleitet wird, und der Desodorierungsschritt eine Dampfdestillation umfasst.

6. Verwendung gemäß einem der vorhergehenden Ansprüche, wobei der Desodorierungsschritt bei weniger als 240°C, vorzugsweise weniger als 230°C, weiter bevorzugt weniger als 220°C ausgeführt wird.

7. Verwendung gemäß einem der vorhergehenden Ansprüche, wobei das Pflanzenöl aus der Gruppe bestehend aus Palmöl, Sojaöl, Rapsöl, Canola-Öl, Sonnenblumenöl, Kokosöl, Palmkernöl, Baumwollsamenöl, Erdnussöl oder Kombinationen aus diesen ausgewählt ist.

8. Verwendung gemäß einem der vorhergehenden Ansprüche, wobei das Pflanzenöl oder die Pflanzenölfraktion aus Palmöl oder einer Palmölfraktion besteht.

9. Verwendung gemäß einem der vorhergehenden Ansprüche, wobei das raffinierte Pflanzenöl weniger als 1 ppm, vorzugsweise weniger als 0,3 ppm an Glycidylestem enthält.

## Revendications

1. Utilisation d'huile végétale brute ou d'une fraction d'huile végétale présentant un niveau maximum de 1,5 % en poids d'acides gras libres dans un procédé de raffinage pour produire une huile végétale raffinée essentiellement dépourvue d'esters glycidyliques,
**caractérisée en ce que** l'huile végétale ou la fraction d'huile végétale présente un niveau maximum de 3,5 % en poids de DAG avant désodorisation.

2. Utilisation selon la revendication 1, dans laquelle le procédé de raffinage comprend une étape de prétraitement, une étape de blanchiment et une étape de désodorisation.

3. Utilisation selon l'une quelconque des revendications précédentes, **caractérisée en ce que** l'huile végétale brute ou la fraction d'huile végétale présente un niveau maximum de 1,4 % en poids d'acides gras libres, de préférence un niveau maximum de 1,3 % en poids d'acides gras libres.

4. Utilisation selon la revendication 3, dans laquelle l'huile végétale ou la fraction d'huile végétale présente un niveau maximum de 3,3 % en poids de DAG, de préférence 3 % en poids avant désodorisation.

5. Utilisation selon la revendication 4, dans laquelle l'étape de prétraitement comprend un prétraitement de l'huile brute avec un acide, l'étape de blanchiment comprend un chauffage de l'huile et un nettoyage de l'huile en la faisant passer à travers de l'argile décolorante absorbante, et l'étape de désodorisation comprend une distillation à la vapeur.

6. Utilisation selon l'une quelconque des revendications précédentes, dans laquelle l'étape de désodorisation est réalisée à moins de 240° C, de préférence à moins de 230° C, encore plus préférablement à moins de 220° C.

7. Utilisation selon l'une quelconque des revendications précédentes, dans laquelle l'huile végétale est choisie parmi le groupe constitué par l'huile de palme, l'huile de soja, l'huile de colza, l'huile de canola, l'huile de tournesol, l'huile de coprah, l'huile de palmiste, l'huile de coton, l'huile d'arachide, l'huile d'arachide, ou des combinaisons de ceux-ci.

8. Utilisation selon l'une quelconque des revendications précédentes, dans laquelle l'huile végétale ou la fraction d'huile végétale est de l'huile de palme ou une fraction d'huile de palme.

9. Utilisation selon l'une quelconque des revendications précédentes, dans laquelle l'huile végétale raffinée comprend moins de 1 ppm, de préférence moins de 0,3 ppm d'esters glycidyliques.
